# EUROPÄISCHE PATENTANMELDUNG

(11) **EP 4 215 596 A2**
(43) Veröffentlichungstag der Anmeldung: **26.07.2023**
(21) Anmeldenummer: 23152612.0
(22) Anmeldetag: 20.01.2023
(51) Int. Cl.: C09K 17/52, A01G 13/02

(54) **VERFAHREN ZUR HERSTELLUNG VON FORMKÖRPERN AUF BASIS VON PROTEINHALTIGEN BIOPOLYMEREN**

(30) Priorität: 21.01.2022 EP 22152615
(71) Anmelder: Secalflor GmbH, 16515 Oranienburg (DE)
(72) Erfinder: SCHMETSDORF, Dietmar, 16831 Rheinsberg (DE)
(74) Vertreter: Hertin und Partner Rechts- und Patentanwälte PartG mbB

(57) **Zusammenfassung**

Die Erfindung betrifft in einem ersten Aspekt ein Verfahren zur Herstellung eines Formkörpers auf Basis von proteinhaltigen Biopolymeren, wobei der Formkörper aus einer Formmasse umfassend 20 bis 40 Gew.-% proteinhaltige Rohstoffe, 35 bis 70 Gew.-% Wasser, 10 bis 25 Gew.- % Pflanzenfasern, 2 bis 20 Gew.-% mineralische Stoffe und 0 bis 8 Gew.-% Nährstoffe hergestellt wird, wobei während des Verfahrens zur Herstellung des Formkörpers diesem keine zusätzlichen Treibmittel der Formmasse hinzugefügt werden. Die Erfindung betrifft in einem zweiten Aspekt eine Vorrichtung zur Herstellung des Formkörpers mittels des Verfahrens.

## Beschreibung

### BESCHREIBUNG

Die Erfindung betrifft ein Verfahren und eine Vorrichtung zur Herstellung von Formkörpern mit reproduzierbaren einheitlichen Eigenschaften auf Basis von proteinhaltigen Biopolymeren und vorzugsweise für die Verwendung als Pflanzplatten oder Isolierplatten.

### HINTERGRUND UND STAND DER TECHNIK

Erosionsvorgänge haben die Landschaften auf unserer Erde entscheidend geprägt. Seit Beginn der verstärkten Ackernutzung nach vorheriger Waldrodung ist eine Form der Bodenerosion getreten, die mit Zunahme der Nutzungsintensität erhebliche Ausmaße angenommen hat. Damit sind Boden- und Schadstoffverlagerungen auf den Flächen selbst verbunden, die mehr oder weniger schnell zur Ausbildung von Abtrags- und Auftragsbereichen des Bodens führten und noch führen. Die schon bestehende Heterogenität auf den landwirtschaftlich genutzten Flächen nimmt zu. Erosion führt an Hängen zum Verlust von humosem Oberbodenmaterial. Die Folge ist eine Verminderung der Wasserspeicherfähigkeit, eine Verarmung an Pflanzennährstoffen und eine verminderte Fließ- und Filterstrecke bis zum Grundwasser. In Senken und Mulden kommt es dagegen zur Anreicherung von Nährstoffen und Chemikalien aus Dünge- und Pflanzenschutzmitteln.

In steigendem Maße kommt es zur negativen Veränderung der Bodenfunktion von Flächen, die zur Aufrechterhaltung des Stoffgleichgewichtes in Landschaften unbedingt erhalten bleiben müssen. Dazu kommt die Erhaltung der Produktionsfunktion, von der wiederum die Bedeckung mit Pflanzen oder Pflanzenrückständen und damit der Schutz der Bodenoberfläche bestimmt wird. Mit Zunahme der Degradationserscheinungen, die überall verstärkt zu beobachten sind, kommt es verstärkt zur Wüstenbildung. Zu wenig wird den erodierenden Kräften - Wind und Wasser - sowie dem Prozess der physikalischen und chemischen Verwitterung Einhalt geboten.

45% der Landfläche der Erde sind von Trockengebieten geprägt. 70% davon sind von Wüstenbildung bedroht. Besonders in Afrika (ca. 9 Millionen km²), Asien (12 Millionen km²) und Lateinamerika (4 Millionen km²) schreitet der Prozess der Ressourcenzerstörung ungehindert voran. Hier spielen neben den klimatischen auch die historischen, politischen, kulturellen und ökonomischen Verhältnisse eine große Rolle.

Auch in Europa sind mittlerweile 25% der landwirtschaftlichen Nutzflächen von durch Menschen verursachte Zerstörung bedroht. Diese Bodenzerstörung gefährdet nicht nur weltweit die Versorgung der Bevölkerung mit Nahrungsmitteln (derzeitig 30% weniger Produktion von Nahrungsmitteln), sondern bewirkt auch einen immer weiteren Rückgang der Wasserressourcen und der CO₂-Speicherung in den betroffenen Gebieten. Die Tendenz ist steigend.

Es ist bekannt, dass Bodenerosion und Wüstenbildung durch Bepflanzung der betroffenen Flächen verlangsamt werden können. Dies kann jedoch aufgrund der geringeren Bodenqualität schwierig sein. Dies wird durch die schlechte Bodenqualität besonders erschwert. Um die Überlebenschancen von Pflanzen in armen Böden zu verbessern, werden sie bekanntlich zunächst in kleine, in der Regel aus Kunststoff bestehende Behälter gepflanzt, bevor sie in den Boden gebracht werden. Dieser Prozess erfordert mehrere Arbeitsschritte und erzeugt unerwünschte Abfälle, welche einen hohen CO₂-Austoß verursachen.

Es besteht also ein Bedarf an einem System, mit dem sich schnell eine geschlossene Pflanzendecke erzeugen lässt, um den Folgen der Bodenverschlechterung entgegenzuwirken. Es besteht auch ein Bedarf an einem System, wobei ausschließlich oder hauptsächlich in der Natur vorhandene Ausgangsstoffe Verwendung finden, damit keine Erdölprodukte mehr in den Stoffkreislauf ihren Eintritt finden.

Um einige dieser Bedürfnisse zu befriedigen, wurden Formkörper entwickelt, die aus natürlichen oder recycelbaren Materialien hergestellt werden. Die Formkörper sind porös, ermöglichen den Wasser- und Nährstofffluss und ahmen die Funktion des Bodens nach. Sie werden derzeit als Hilfsmittel für die Bepflanzung und Isolierung verwendet.

Die Anforderungen, die an Materialien für die Verwendung in solchen Formkörpern gestellt werden, sind sehr unterschiedlich. Je nachdem, ob diese als Pflanzplatten im Gartenbau und Landschaftsbau, als Isolierplatten in der Bauindustrie, neue Verbundwerkstoffe oder als Textilgrundstoff eingesetzt werden sollen, werden besondere Forderungen hinsichtlich der Abbaubarkeit, der Elastizität, der Festigkeit, des Wärmedurchganges, des Schalldurchganges oder der Tragbarkeit gestellt.

Bei der Herstellung von Produkten aus sogenannten nachwachsenden Rohstoffen, beispielsweise proteinhaltigen Biopolymeren, treten immer wieder Probleme auf, die die Maßhaltigkeit und die Homogenität der produzierten Produkte betreffen. Zum einen sind diese Probleme darin begründet, dass die in der Natur wachsenden Rohstoffe durch die sich ständig ändernden Wachstumsbedingungen unterschiedliche, physikalische, chemische und auch mechanische Eigenschaften aufweisen. Auch wenn diese natürlichen Rohstoffe mit anorganischen Substanzen oder synthetisch hergestellten Materialien gemischt (verschnitten) werden, ist die Reproduzierbarkeit der physikalischen, chemischen und mechanischen Eigenschaften nicht immer zu erreichen.

Wenn man versucht, solche nachwachsenden Materialien zu porösen Körpern zu formen, besteht eine der vielen Schwierigkeiten darin, dass beim Trocknen eines festen Körpers aus einem Flüssigkeitsgemisch die Außenflächen des festen Körpers dazu neigen, viel dichter und weniger porös zu sein als die inneren Teile. Dies führt zu dem Problem, dass solche Körper für die Bepflanzung nicht geeignet sind, da sie sich nicht leicht mit dem örtlichen Boden verbinden oder Flüssigkeiten nicht in das innere Porennetz eindringen können.

DE19855283A1 offenbart ein Verfahren zur Herstellung eines Formkörpers aus nachwachsenden Materialien wie Pflanzenfasern. Der Formkörper wird aus einer geschäumten Mischung als Platte geformt und danach getrocknet. Das offenbarte Verfahren führt jedoch zu einem Formkörper mit ungleichmäßiger Dichte und geringer Porosität. Die rheologischen Eigenschaften der geschäumten Mischung begrenzen die Dicke und Form des Formkörpers sowie die Anzahl der Blasen, die getrocknet werden konnten, um Poren zu bilden. Aufgrund der geringeren Porosität hat der Formkörper ein geringes Verhältnis von Oberfläche zu Volumen und interagiert nur begrenzt mit der umgebenden Erde, wenn er in den Boden gepflanzt wird. Der Formkörper hat nach dem Trocknen eine dichte äußere Haut, so dass seine Interaktion mit Pflanzen und Boden beeinträchtigt wird.

Es wäre daher wünschenswert, einen organischen Formkörper mit gleichmäßiger Porosität sowohl in den inneren als auch in den äußeren Teilen bereitzustellen. Es wäre auch wünschenswert einen solchen Formkörper mit hohem Luftporengehalt als Dämmstoff zu entwickeln. Um die Artenvielfalt in Städten zu erhöhen, wäre es auch wünschenswert, solche Formkörper zu entwickeln, die sowohl zur Dämmung von Dächern und Wänden als auch zur Begrünung dieser Flächen eingesetzt werden können.

Derzeit sind keine Herstellungsverfahren bekannt, mit denen solche Formkörper mit einer vorbestimmten Dicke, Blasengröße und Dichte hergestellt werden können, so dass ein stabiler Formkörper mit geringer Dichte, hohem Wasserspeichervermögen, guter Wasser- und Luftdurchlässigkeit, Korrosionsbeständigkeit und Temperaturbelastbarkeit bereitgestellt werden kann.

### AUFGABE DER ERFINDUNG

Aufgabe der Erfindung ist es, einen Formkörper mit einheitlichen vorteilhaften Eigenschaften durch ein reproduzierbares Verfahren bereitzustellen, welcher die Nachteile des Standes der Technik überwindet. Es war auch eine Aufgabe der Erfindung, eine Vorrichtung für die Herstellung des erfindungsgemäßen Formkörpers bereitzustellen.

### DETAILLIERTE BESCHREIBUNG DER BEVORZUGTEN AUSFÜHRUNGSFORMEN

Gelöst wird die Aufgabe durch die Merkmale der unabhängigen Ansprüche. Vorteilhafte Ausgestaltungen der Erfindung sind in den abhängigen Ansprüchen und in der Beschreibung offenbart.

In einem ersten Aspekt betrifft die Erfindung ein Verfahren zur Herstellung eines Formkörpers auf Basis von proteinhaltigen Biopolymeren, wobei der Formkörper aus einer Formmasse umfassend:
- 20 bis 50 Gew.-%, insbesondere 20 bis 40 Gew.-%, proteinhaltige Rohstoffe,
- 35 bis 70 Gew.-% Wasser,
- 10 bis 25 Gew.- % Pflanzenfasern,
- 2 bis 25 Gew.-%, insbesondere 2 bis 20 Gew.-% mineralische Stoffe und
- 0 bis 8 Gew.-%, insbesondere 1 bis 8 Gew.-% Nährstoffe
hergestellt wird, wobei während des Verfahrens keine zusätzlichen Treibmittel der Formmasse hinzugefügt werden. Die Zusammensetzung der Formmasse umfasst vorzugsweise auch feinkörnige anorganische Zusatzstoffe.

Vorzugsweise betragen die Anteile an proteinhaltigen Rohstoffen, Wasser, Pflanzenfasern, Mineralstoffen, optionalen Nährstoffen und optionalen feinkörnigen anorganischen Zusatzstoffen 100 Gew.-%. Sollte die Zusammensetzung der Formmasse keine Nährstoffe und keine feinkörnigen anorganischen Zusatzstoffe umfassen, betragen die Anteile an proteinhaltigen Rohstoffen, Wasser, Pflanzenfasern und Mineralstoffen vorzugsweise 100 Gew.-%.

In einer bevorzugten Ausführungsform der Erfindung umfasst die Formmasse 25 bis 50 Gew.-%, insbesondere 25 bis 40 Gew.-% proteinhaltige Rohstoffe, 35 bis 70 Gew.-% Wasser, 10 bis 25 Gew.- % Pflanzenfasern, 12 bis 25 Gew.-% mineralische Stoffe und 1 bis 8 Gew.-% Nährstoffe, wobei während des Verfahrens keine zusätzlichen Treibmittel der Formmasse hinzugefügt werden. Die Zusammensetzung der Formmasse umfasst vorzugsweise auch feinkörnige anorganische Zusatzstoffe.

In einem weiteren Aspekt betrifft die Erfindung einen Formkörper auf Basis von proteinhaltigen Biopolymeren, wobei der Formkörper aus einer Formmasse umfassend mindestens 25 Gew.-% proteinhaltige Rohstoffe, mindestens 35 Gew.-% Wasser, mindestens 10 Gew.-% Pflanzenfasern, mindestens 12 Gew.-% mineralische Stoffe und optional mindestens 1 Gew.-% Nährstoffe hergestellt wird, wobei vorzugsweise während eines Verfahrens zur Herstellung der Formkörper keine zusätzlichen Treibmittel der Formmasse hinzugefügt werden. Die Zusammensetzung der Formmasse umfasst vorzugsweise auch feinkörnige anorganische Zusatzstoffe.

Es wurde festgestellt, dass sich die obigen Zusammensetzungen besonders gut für ein Massenherstellungsverfahren, vorzugsweise ein kontinuierliches Verfahren, eignen. Die erfindungsgemäße Zusammensetzung weist geeignete rheologische Eigenschaften zum Mischen, Schäumen und Extrudieren auf. Zudem wurde festgestellt, dass sich die Zusammensetzung aufgrund des geringeren Wassereinsatzes für die Feinabstimmung der pH- und Feuchtigkeitseigenschaften der Zwischen- und Endprodukte eignet. Aufgrund der hohen Viskosität des Schaums kann dieser zu einem Strang mit einem definierten Durchmesser oder einem definierten Querschnitt extrudiert werden. Dadurch können Formkörper mit genau vordefinierten Abmessungen hergestellt werden.

Die Verschäumung einer Suspension stellt eine Herausforderung dar, da sich solche Schäume auf unterschiedliche Weise verhalten können, von einer dünnen Flüssigkeit bis hin zu einer nichtnewtonschen Flüssigkeit oder einem Feststoff. Überraschenderweise trägt die erfindungsgemäße Zusammensetzung zur Herstellung eines fein kontrollierten Schaums mit besonders vorteilhafter Blasengröße, -form und -dichte bei. Der Schaum kann vorteilhafterweise ohne den Zusatz von Treibmitteln zu einer hohen Viskosität verarbeitet werden. Diese Schaumeigenschaften haben einen starken Einfluss auf die Definition der endgültigen Porosität des Endprodukts, da die Blasen zu Poren getrocknet werden können. Die Einstellbarkeit der Schaumeigenschaften ist sehr vorteilhaft bei der Herstellung von Formkörpern auf der Basis von proteinhaltigen Biopolymeren, die sehr spezifische Dichten und Porositäten aufweisen.

Ein stabiler Schaum umfasst vorzugsweise hydrophobe und hydrophile Gruppen. Ohne an eine Theorie gebunden sein zu wollen, wird angenommen, dass die bevorzugte Zusammensetzung ein optimales Gleichgewicht solcher Gruppen bereitstellt, so dass Grenzflächen zwischen der wässrigen Phase und der Gasphase des Schaums gebildet werden können. Es wurde festgestellt, dass ein Verschäumungsprozess polyedrische Blasen erzeugt, die durch dünne Filme getrennt sind. Durch Einstellen der Wassermenge in der Zusammensetzung auf mindestens 35 % konnte die Blasenpackung maximiert werden. Die Blasen nahmen eine sechseckige Form an, was zu einer starken Tesselation führte. Der Schaum konnte niedrige Dichten von nur φ = 25 % erreichen. Hierdurch konnte die Oberflächenenergie des Schaums und des resultierenden Formkörpers maximiert werden. Dadurch wurde der Trocknungsprozess des Schaums optimiert und die intermolekularen Wechselwirkungen zwischen dem Formkörper und seiner Umgebung verstärkt.

Mit der erfindungsgemäßen Zusammensetzung konnte ein sehr stabiler Schaum mit geringer Dichte und hoher Blasenzahl gebildet werden. Die hohe Konzentration von Luftblasen im Schaum ermöglicht eine besonders schnelle und effiziente Trocknung, ohne dass der Schaum zusammenbricht. Die Blasen können durch Trocknung in Poren, insbesondere Durchgangsporen, umgewandelt werden. Der resultierende Formkörper hat somit eine sehr hohe Porosität. Darüber hinaus ermöglicht die hohe Oberflächenenergie der Poren eine hervorragende Kapillarwirkung, die die Schwerkraft kompensieren kann. Hierdurch kann der Formkörper Wasser- und Luftphasen sehr gut halten und die Wachstumsbedingungen für Pflanzen verbessern.

Es wurde zudem überraschenderweise festgestellt, dass die oben genannte Zusammensetzung zur Herstellung eines Formkörpers mit besonders vorteilhaften Eigenschaften führt. Die erfindungsgemäßen Formkörper weisen sowohl im Inneren als auch im Randbereich eine offenporige Struktur auf. Die Dichte der Formkörper ist gering, sodass sie eine gute Wasser- und Luftdurchlässigkeit aufweisen. Die geringe Dichte trägt dazu bei, dass die Formkörper sich besonders gut für die Bepflanzung mit Samen eignen, da sie genügend Wasser für das Wachstum der Samen zurückhalten können und gleichzeitig für ausreichende Anwesenheit von Luft sorgen. Dies ist besonders in trockenen Regionen mit schwierigen Böden von Vorteil. Darüber hinaus ist die geringe Dichte besonders wirksam bei der Verringerung der Übertragung von Wärme und Schall.

Die Formkörper sind aufgrund ihrer Zusammensetzung und Materialeigenschaften besonders geeignet, Saatgut und Keimlinge in engen Kontakt mit allen drei Bodenphasen, also Feststoff, Wasser und Luft, zu bringen. Der Nährstoff-, der Protein- und der Mineralgehalt ist so ausgewählt, dass er das Wachstum einer Vielzahl von Pflanzen maximiert. Das Ergebnis des erfindungsgemäßen Verfahrens ist somit ein Formkörper, der nicht nur kleinen Pflanzen physische Stabilität bietet, sondern auch ein besonders fruchtbares Umfeld, wodurch sich die Erfolgsquote beim Anpflanzen drastisch verbessert.

Überraschend war auch, dass die mittels des Verfahrens hergestellten Formkörper besonders widerstandsfähig gegenüber verschiedenen Temperaturen sind. Dies ist besonders vorteilhaft, da sie in einer Vielzahl von Bodentypen und Klimazonen eingesetzt werden können.

Die mittels des Verfahrens hergestellten Formkörper können aufgrund ihrer Zusammensetzung und ihrer Fähigkeit, sich mit dem örtlichen Boden zu vernetzen, schnell und nahtlos in den Boden integriert werden, ohne dass Abfall anfällt. Durch die Reduzierung von Abfällen und die Verbesserung des Pflanzenwachstums kann die CO₂-Belastung synergetisch reduziert werden.

Die Formkörper weisen eine überraschend geeignete Festigkeit auf, sodass sie gut mechanisch bearbeitbar sind. Die strukturellen Eigenschaften der Formkörper sind überraschenderweise sowohl für die Einsetzung in den Boden für landwirtschaftliche Zwecke als auch in Dächern und Wänden für Isolationszwecke geeignet.

Die Eigenschaften der Formkörper sind für die genannten Verwendungszwecke besonders vorteilhaft, wobei aufgrund der Zusammensetzung der Formkörper diese Eigenschaften in der Massenherstellung genau abgestimmt werden können.

In einer bevorzugten Ausführungsform der Erfindung umfasst das Verfahren zur Herstellung des Formkörpers eine Trocknung durch Mikrowellen, wobei die Trocknung vorzugsweise auf einem fließenden Förderband erfolgt. Überraschenderweise wurde festgestellt, dass die Trocknung durch Mikrowellen im gesamten Produkt, d. h. vom Kern bis zu den Oberflächen, mit einer ähnlichen Geschwindigkeit erfolgt. Die Mikrowellentrocknung kann schnell erfolgen, ohne dass der Schaum in sich zusammenfällt. Die dünnwandige Struktur, die die Luftblasen trennt, kann so während des Trocknens beibehalten werden, was zu einem sehr leichten und porösen Formkörper führt. Der resultierende Formkörper ist in seinen Eigenschaften überraschend einheitlich. Darüber hinaus kann das Verfahren äußerst effizient durchgeführt werden. Indem man die Formmasse durch einen Bereich oder eine Kammer fließen lässt, in dem bzw. der Mikrowellen ausgestrahlt werden, kann der Prozess kontinuierlich durchgeführt werden, was die Herstellungskosten erheblich senkt und Abfall vermeidet.

Die Mikrowellentrocknung wirkt sich also auf die Schaumstoffeigenschaften aus, um die Porosität des resultierenden Formkörpers zu maximieren und sicherzustellen, dass die Poren gleichmäßig verteilt und von den Oberflächen des Formkörpers aus zugänglich sind. Der Formkörper kann sich daher sehr gut mit Pflanzenwurzeln vernetzen und diese durch Kapillarwirkung mit Wasser versorgen. Außerdem können sich die Wurzeln unbegrenzt ausdehnen, ohne dass ungleichmäßige Materialeigenschaften des Formkörpers Hindernisse darstellen.

In einer bevorzugten Ausführungsform der Erfindung umfasst das Verfahren zur Herstellung des Formkörpers einen Schritt, bei dem die proteinhaltigen Rohstoffe zusammen mit den mineralischen Stoffen und optional den Nährstoffen in einem Behälter mit laufendem Rührwerk in Wasser zu einer homogenisierten Masse vermischt werden. Vorzugsweise ist die homogenisierte Masse eine Suspension.

Es wurde festgestellt, dass diese Komponenten miteinander verträglich sind und sich besonders gut miteinander mischen lassen. Die Anwesenheit von Proteinen in der Mischung verbesserte die Homogenität, da Proteine sowohl hydrophile als auch hydrophobe Regionen umfassen und somit als Tenside wirken können. Zugleich können die Proteine das Wachstum im Boden fördern und sind biologisch abbaubar. Außerdem wurde festgestellt, dass ein Behälter mit laufendem Rührwerk die verschiedenen Phasen der Mischung schnell und effizient miteinander in Kontakt bringen kann, wodurch die Homogenität der Mischung erhöht wird. Die verschiedenen Phasen der Zusammensetzung umfassen vorzugsweise eine wässrige Phase und eine feste Phase, welche die mineralischen Stoffe umfasst. Durch die Herstellung einer homogenen Suspension lassen sich die Eigenschaften des Endprodukts leicht vorhersagen. Dies ist besonders nützlich, um trotz kleiner Schwankungen bei den Ausgangsstoffen einen kontinuierlichen Herstellungsprozess zu ermöglichen.

Der Behälter ist vorzugsweise ein Rotor-Stator-Mischer wobei der Rotor mit einer Geschwindigkeit zwischen 5 - 15, vorzugsweise 8 - 12, besonders bevorzugt circa 9,86 Umdrehungen pro Minute rotiert. Bei dieser Geschwindigkeit konnten Wasser, proteinhaltige Rohstoffe, mineralische Stoffe und optional Nährstoffe überraschend gut homogenisiert werden, ohne die Gesamtprozesszeit zu verlängern.

In einer weiteren bevorzugten Ausführungsform der Erfindung umfasst das Verfahren zur Herstellung des Formkörpers einen Schritt, bei dem die Pflanzenfasern während der Vermischung der homogenisierten Masse in den Behälter eingeführt werden. Die Pflanzenfasern sind der Bestandteil mit der größten Tendenz zu natürlichen Schwankungen. Vorzugsweise werden die Pflanzenfasern in einem früheren Schritt getrocknet. Vorzugsweise umfassen die Pflanzenfasern Holzfasern mit einer Feuchte zwischen 12 - 16%. Das Trocknen der Fasern kann ihre Hydrophilie erhöhen und damit den Mischprozess mit der wässrigen Phase verbessern. Die Rate, mit der die Pflanzenfasern zugegeben werden, kann zur Einstellung der Viskosität und Dichte der Mischung verwendet werden, um die gewünschten Endeigenschaften zu erhalten.

Der pH-Wert der Mischung kann von den verwendeten Bestandteilen und deren relativen Mengen abhängen. Vorzugsweise ist das Mischverfahren einschließlich der Zugabe der Pflanzenfasern und proteinhaltigen Stoffen so gestaltet, dass eine homogenisierte Masse mit einem pH-Wert zwischen 5,0 und 12, vorzugsweise zwischen 5,5 - 10, noch bevorzugter zwischen 6,0 und 7,5 entsteht. Die meisten Pflanzen benötigen im Wurzelbereich einen pH-Wert zwischen 5,5 und 7,5. Geringfügige Abweichungen nach oben oder unten haben keine schädlichen Auswirkungen auf das Wurzelsystem. Hiermit kommen diese gut zurecht. Durch die Einstellung des pH-Wertes auf diesen Wert ist der Formkörper besonders gut geeignet, das Pflanzenwachstum zu fördern. Ferner kann durch Einstellung des pH-Werts die Oberflächenenergie der Formmasse vorteilhaft angepasst werden, um die Anzahl der Blasen und damit die Porosität des Formkörpers zu erhöhen.

Die proteinhaltigen Stoffe können als Tenside fungieren. Diese umfassen vorzugsweise molekulare Bereiche mit unterschiedlichen Ladungen oder Polaritäten. Die Moleküle der proteinhaltigen Stoffe können somit sowohl hydrophil als hydrophob agieren. Hierdurch können aus den proteinhaltigen Stoffen Grenzflächen (auch "Doppelschichten") zwischen einer wässrigen Phase und einer Gasphase (auch "Luftphase") entstehen, welche besonders stabile Blasen formen können. Der pH-Wert der Mischung beeinflusst die Oberflächenladung der proteinhaltigen Stoffe. Die Materialeigenschaften - wie beispielsweise die Oberflächenspannung - der Grenzflächen können durch den Protonierungsgrad der proteinhaltigen Stoffe bestimmt werden. Der Protonierungsgrad wird durch den pH-Wert der Suspension beeinflusst. Dabei wirken pH-Werte abseits des isoelektrischen Punkts aufgrund der starken abstoßenden Ladung zwischen den Molekülen kolloidal stabilisierend, wohingegen die verschwindende Nettoladung am isoelektrischen Punkt zur Aggregation führt. Ladung spielt also eine entscheidende Rolle für das Verhalten von Proteinen in kolloidalen Lösungen, was folglich Auswirkungen auf deren Verhalten an der Grenzfläche hat. Bei pH-Werten um den isoelektrischen Punkt liegt aufgrund des durch die proteinhaltigen Stoffe geringen eingetragenen lokalen elektrischen Feldes ein Minimum in der Ordnung der Wassermoleküle vor.

Ein pH-Wert von 5,0 bis 12, insbesondere 5,5 bis 10, besonders bevorzugt 6 bis 9,8 ergibt eine Erhöhung der Schaumbildung und der Schaumstabilität. Hierdurch kann auch die Rheologie des Schaums eingestellt werden, um Formkörper beliebiger Dimensionen herzustellen.

Vorzugsweise umfassen die proteinhaltigen Stoffe Aminosäuren wie Histidin, Glutamat oder Aspartat, deren Eigenschaften sich besonders gut durch den pH-Wert abstimmen lassen. Außerdem haben diese Aminosäuren ein besonders hohes Molekulargewicht, welches die Oberflächenviskosität der homogenen Masse erhöht, die Stabilität der Blasen sowie des aus der homogenisierten Masse hergestellten Schaums verbessert.

Die Oberflächenviskosität kann die Schaumhaltbarkeit einer Suspension oder einer Lösung beeinflussen. Sie beschreibt vorzugswese die Kohäsion zwischen absorbierten Molekülen auf einen Oberflächenfilm, insbesondere auf die Schaumlamellen, welche die Blasen voneinander trennen. Hochmolekulare Substanzen wie Aminosäure erhöhen die Oberflächenviskosität und verzögern den Rückfluss derselben Moleküle aus den Schaumlamellen.

In einer weiteren bevorzugten Ausführungsform der Erfindung erfolgt die Vermischung vorzugsweise bei einer Temperatur zwischen 3° - 35°C, vorzugsweise zwischen 15 - 25°C. Dies ist besonders vorteilhaft, da die Vermischung bei Raumtemperatur und unter Umgebungsbedingungen in einer Vielzahl von Klimazonen und zu verschiedenen Tages- und Nachtzeiten erfolgen kann. Es wird keine Energie zum Heizen oder Kühlen der Mischanlage benötigt.

Vorzugsweise ist die Vermischung dafür konfiguriert, die Viskosität der homogenisierten Masse auf 10² mPas - 10² Pas abzustimmen. In einer weiteren bevorzugten Ausführungsform der Erfindung ist die Vermischung vorzugsweise dafür konfiguriert, dass die homogenisierte Masse einen Feuchtegehalt zwischen 59 - 65% aufweist. Ein Feuchtegehalt in diesem Bereich ermöglicht eine einfache Weiterverarbeitung, einschließlich des Aufschäumens und Extrudierens, wobei eine sehr gute Schaumviskosität und Porosität beim Trocknen des Formkörpers erhalten bleiben.

In einer weiteren bevorzugten Ausführungsform der Erfindung umfasst das Verfahren zur Herstellung des Formkörpers einen Schritt, bei dem die homogenisierte Masse bei Anwesenheit von Luft verschäumt wird. Vorzugsweise ist die Luft Umgebungsluft. Die Luft kann vorzugsweise in die homogenisierte Masse gepumpt werden. Die Verschäumung erfolgt vorzugsweise in einem Mischer bei einer Temperatur zwischen 3° - 35°C, vorzugsweise zwischen 15 - 25°C. Je nachdem, ob das Verfahren als Batch- oder kontinuierlicher Prozess konfiguriert ist, kann dies derselbe Mischer sein, der für die Vermischung verwendet wird oder ein zweiter Mischer. Im Falle eines kontinuierlichen Herstellungsverfahrens erfolgt das Aufschäumen in einem zweiten Mischer. Der Mischer ist vorzugsweise so konfiguriert, dass er einen stabilen Schaum erzeugt.

Der Rotor des Mischers dreht sich vorzugsweise mit einer Geschwindigkeit zwischen 250 - 500 1/min, vorzugsweise 300 - 400 1/min (Umdrehungen pro Minute), besonders bevorzugt circa 360 Umdrehungen pro Minute. Vorzugsweise wird die Suspension während der Verschäumung einem Druck von 3 - 5 bar, vorzugsweise 3,5 - 4,5 bar ausgesetzt. Eine Verweilzeit der homogenisierten Masse bei der Verschäumung beträgt vorzugsweise zwischen 45-90 Sekunden, noch bevorzugter circa 63 Sekunden.

Bei diesen Parametern wurde festgestellt, dass eine besonders effiziente Verteilung der Luft in der wässrigen Phase stattfinden kann, um einen homogenen Schaum zu erzeugen. Der resultierende Schaum hatte sehr feine Blasen mit dünnen Grenzflächen, was zu einer hervorragenden Porosität des Formkörpers führte.

Die Drehzahl des Rotors beeinflusst die Qualität des erhaltenen Schaumes, weil in den Scherspalten die Luft verwirbelt und sozusagen geteilt wird. Bei einer höheren Drehzahl werden die im Schaum entstandenen Luftbläschen kleiner, sodass der Schaum stabiler wird. Eine Drehzahl von circa 360 1/min hat einen überraschend gut verarbeitbaren Schaum erzeugt.

Mit den oben genannten Verfahrensparametern konnte ein besonders stabiler und haltbarer Schaum gebildet werden. Die Schaumhaltbarkeit ist von vielen Faktoren abhängig. Ein Faktor ist die Oberflächenelastizität. Diese beschreibt die Fähigkeit einer Schaumlamelle, der örtlichen Kraftwirkung standzuhalten. Mit der bevorzugten Zusammensetzung und den bevorzugten Parametern des Verschäumungsschrittes kann eine besonders hohe Oberflächenelastizität erreicht werden.

Die Schaumstabilität ist zudem abhängig von der Geschwindigkeit, mit der die oberflächenaktiven Substanzen - wie beispielsweise die proteinhaltigen Stoffe - in den die Blasen umgebenden Film (die Schaumlamellen) eindringen können bzw. ihn wieder verlassen können. Die oberflächenaktiven Substanzen bestehen vorzugsweise aus hydrophilen und hydrophoben Zonen. Dabei sind die hydrophoben Enden für die Oberflächenaktivität der Stoffe verantwortlich. Die bevorzugten Parameter des Verschäumungsschrittes - insbesondere in Kombination mit dem bevorzugten pH-Wert - können zu einer hohen Hydrophobizität in den proteinhaltigen Stoffen führen. Die Oberflächenaktivität kann dadurch niedrig gehalten werden, so dass die im Schaum gebildeten Blasen nur mit ausreichendem Druck zum Platzen gebracht werden können. Der Schaum ist somit besonders stabil. Es wurde auch festgestellt, dass dies zu einer vorteilhaften Erhöhung der Viskosität und der Fließspannung des Schaums beiträgt.

Unter Schaum versteht man vorzugsweise eine Dispersion von Gas in einer Flüssigkeit oder einem Feststoff. Schaum umfasst vorzugsweise Luftblasen, die von dünnen Flüssigkeitsfilmen umgeben sind. In diesem Fall ist die Flüssigkeit die wässrige Suspension, während das Gas die Luft ist. Die Flüssigkeit enthält Komponenten, die mehr oder weniger hydrophil sind. Diese haben die Tendenz, sich zu ordnen, um eine Grenzfläche zwischen der Luft und der Flüssigkeit zu bilden, wobei die Grenzfläche in der Regel eine Blase definiert. Da eine äußere Schicht der Blase tendenziell hydrophiler ist als eine innere Schicht, wird die doppelschichtige Grenzfläche oft als Schaumlamelle bezeichnet. Der Schaum stellt dabei ein sehr komplexes Produkt dar, dessen Eigenschaften nur sehr schwer kontrolliert werden können. Zur Ermittlung der Einflussgrößen auf den entstandenen Schaum werden die einzelnen Phasen untersucht und auf ihren Einfluss hin analysiert. Ein molekulares Verständnis der Grenzfläche ist der Schlüssel, um die Eigenschaften der Grenzflächen und damit die Schaumeigenschaften zu kontrollieren.

Als Beispiel können die proteinhaltigen Stoffe Roggen umfassen. Materialien wie Roggen, die wässrig lösliche Proteine und Pentosane enthalten, können als Schaumbildner verwendet werden. Die wässrig löslichen Bestandteile sind in der wasserlöslichen flüssigen Phase lokalisiert. Bei Betrachtung der Absorption der Proteine an der Wasser-Luft-Grenzfläche einer Mischung, die Wasser und Roggen umfasst, wurde überraschenderweise festgestellt, dass die geladenen Proteinmoleküle die Eigenschaften der Grenzfläche stark beeinflussen.

Die Oberflächenladungen der wasserlöslichen Proteine und die daraus resultierende elektrische Doppelschicht, d.h. die Grenzfläche oder Schaumlamelle, wird durch den pH-Wert der Proteinlösung stark beeinflusst. Im Ergebnis geht es hier um die von den Proteinen erzeugten elektrischen Felder an der Grenzfläche. Dies wird im Wesentlichen durch den pH-Wert der homogenisierten Masse bestimmt. Ein Optimum an Schaumstabilität und dichter Kugelpackung wird bei einem pH-Wert von 5,0 bis 12, insbesondere 6 bis 9,8 erreicht.

Die im Schaum gebildeten Blasen haben zunächst die Form von Polyedern mit gekrümmten Oberflächen. Durch die Zugabe von Flüssigkeit, vorzugsweise Wasser, in diesem Stadium können diese Blasen abgerundet und ihre Dichte erhöht werden. Der Schaum erhält dadurch eine höhere Stabilität.

Nach einer Verweilzeit von vorzugsweise 45 - 90 Sekunden, besonders bevorzugt circa 63 Sekunden, bei dem Vermischungsschritt wird die homogenisierte Masse mit ausreichend Luftbläschen gefüllt, um eine vorbestimmte Dichte von 20 - 30% sowie eine sehr dichte Kugelpackung der Blasen zu erhalten. Die relative Feuchte bei diesen Betriebsbedingungen ist circa 45%. Vorteilhafterweise kann sowohl die Verweilzeit als auch die entsprechende Flussrate der homogenisierten Masse durch den Mischer angepasst werden, um eine vorbestimmte Dichte und/oder relative Feuchte zu erhalten. Die Verweilzeit und Flussrate hängen vorzugsweise auch von den Größen des Rotors und des Stators ab.

In einer bevorzugten Ausführungsform der Erfindung ist die Verschäumung der homogenisierten Masse dafür konfiguriert, einen Schaum mit einem durchschnittlichen Blasendurchmesser von 1 - 3000 µm, vorzugsweise 200 - 2000 µm, noch bevorzugter 400 - 1300 µm zu erhalten. Der Blasendurchmesser kann beispielsweise durch Einstellung des pH-Werts der Suspension, des Drucks mit der Luft in die Suspension gepumpt, der Geschwindigkeit des Rotors eines Mischers und/oder der Verweilzeit in einem Mischer eingestellt werden. Durch die Bereitstellung eines Schaums mit den bevorzugten Blasendurchmessern waren die Poren eines resultierenden Formkörpers besonders geeignet, Wasser durch Kapillarwirkung zu speichern. Aufgrund der feinen durchgehenden Poren konnten insbesondere das Verhältnis von Oberfläche zu Masse und die Oberflächenenergie des Formkörpers maximiert werden. So entstand eine große Oberfläche, die mit den umgebenden Flüssigkeiten interagieren konnte, zum Beispiel durch Wasserstoffbrückenbindungen. Flüssigkeiten und darin gelöste Nährstoffe konnten so im Formkörper gehalten werden, anstatt wie bei harten oder sandigen Böden weggeschwemmt oder entwässert zu werden.

In einigen Ausführungsformen ist der Schaum vorzugsweise eine Bingham-Flüssigkeit. Eine Bingham-Flüssigkeit ist vorzugsweise eine Flüssigkeit, die eine Fließgrenze besitzt, die überschritten werden muss, bevor die Flüssigkeit fließen kann.

In einer bevorzugten Ausführungsform der Erfindung hat der Schaumstoff eine Fließgrenze von 1 - 4 Pa. Das heißt, dass vorzugsweise ein Druck von mindestens 1 - 4 Pa erforderlich ist, um den Schaumstoff zu verformen. Der Schaumstoff ist daher besonders stabil und kann zu einer Form (z.B. Platte, Scheibe, Würfel usw.) geformt werden und diese Form beim Trocknen beibehalten. Der resultierende Formkörper ist daher besonders flexibel in seiner Form und muss nicht aus kleineren Teilen zusammengesetzt werden, um komplexere Formen oder dickere Abmessungen zu bilden (z.B. einen Würfel statt einer dünnen Platte). Der Formkörper kann somit besonders einheitliche Materialeigenschaften und eine durchgängig gleichmäßige Dichte und Porosität auch bei großen Abmessungen aufweisen.

Die Dicke einer Gleitschicht des Schaums hängt vorzugsweise von der Blasengröße und der Geometrie einer Schaumdüse ab. Vorzugsweise weist der Schaumstoff eine Gleitschichtdicke zwischen 0,1 - 10 mm auf.

In einer bevorzugten Ausführungsform der Erfindung hat der Schaum eine Fließspannung von mindestens 350 - 500 kPa. Bei solchen Fließspannungen kann der Schaum mit einer Düse geformt werden, während er auf einer Oberfläche für die weitere Verarbeitung stabil bleibt. Die Stabilität des Schaums verhindert außerdem den Zusammenbruch seiner Struktur aus Blasen und Schaumlamellen, so dass diese während des Trocknens beibehalten werden können, was zu einem Formkörper mit einer hohen Dichte an durchgehenden Poren, hoher Festigkeit und hoher Elastizität führte.

In einer weiteren bevorzugten Ausführungsform der Erfindung ist die Verschäumung der homogenisierten Masse dafür konfiguriert, einen Schaum mit einer relativen Dichte zwischen 15 - 35 %, vorzugsweise zwischen 20 - 30%, insbesondere ungefähr 26 % zu erhalten, wobei die relative Dichte dem Verhältnis zwischen dem Volumen einer kontinuierlichen Flüssigkeitsmatrix, welche mehrere Blasen voneinander trennt, und dem Gesamtvolumen des Schaumes entspricht. Vorzugsweise weist der Schaum eine relative Feuchte zwischen 40 % - 50 % auf, wobei eine relative Feuchte von circa 45 % besonders bevorzugt ist.

In einer weiteren bevorzugten Ausführungsform der Erfindung werden die Blasen durch Zugabe von Flüssigkeit während der Verschäumung abgerundet. Die Kugelpackung der Blasen wird vorzugsweise auch durch Zugabe von Flüssigkeit erhöht. Die Flüssigkeit ist vorzugsweise Wasser.

In einer weiteren bevorzugten Ausführungsform der Erfindung weist der Schaum eine relative Feuchte zwischen 35 - 45% und eine bevorzugte Viskosität zwischen 10² mPas - 10² Pas.

Der so enthaltene Schaum ist sehr stabil. Dieser zeichnet sich durch hohe thermische und mechanische Belastbarkeit aus. Des Weiteren weist er eine hohe Standfestigkeit (t≥ 35 min) auf und zerfällt nicht sofort. Eine mechanische Weiterverarbeitung ist somit vorteilhafterweise gegeben, ohne dass der Schaum zusammenfällt.

In einer weiteren bevorzugten Ausführungsform der Erfindung umfasst das Verfahren zur Herstellung des Formkörpers einen Schritt, bei dem die verschäumte homogenisierte Masse mittels eines Pflugscharmischers zu einem Strang geformt wird. Der Pflugscharmischer zeichnet sich vorzugsweise durch kurze Mischzeiten, eine hohe Mischgüte, hohe Reproduzierbarkeit und schonende Produktbehandlung, sowie Wartungsarmut aus. Der Pflugscharmischer umfasst vorzugsweise mehrere Pflugschare. Die Anordnung der Pflugschare erfolgt vorzugsweise so, dass der Schaum schonend transportiert wird und die Inhaltsstoffe miteinander verbunden werden.

Vorzugsweise wird hierfür der Pflugscharmischer mit einer Drehzahl zwischen 50 - 80, vorzugsweise 55 - 70, noch bevorzugter 65 Umdrehungen pro Minute betrieben. Eine Mischzeit von 10 - 15 min, vorzugsweise von 12 min ist besonders bevorzugt. Es wurde überraschenderweise festgestellt, dass bei dieser Drehzahl die Wirkung des Pflugscharmischers besonders schonend für den Schaum ist. Dieses schonende Mischen gibt dem Produkt seine ihm zugewiesenen Eigenschaften.

Vorzugsweise umfasst der Pflugscharmischer eine Düse, aus welchem der Schaum austritt. Eine Düse kann insbesondere dazu beitragen, den austretenden Schaum zu formen und seine Fließgeschwindigkeit zu erhöhen. Vorzugsweise weist die Düse einen ersten und einen zweiten Durchmesser auf, wobei ein Größenverhältnis zwischen dem zweiten und ersten Durchmesser mindestens 1:2, vorzugsweise mindestens 1:4, noch bevorzugter mindestens 1:8 beträgt. Diese Verengung der Düse kann den Fluss des Schaums besonders beschleunigen und seinen Druck verringern. Dies verringert das Risiko, dass die Blasen zusammenfallen, wenn der Schaum den Pflugscharmischer verlässt.

Durch die kontinuierliche Zuführung des Schaums zum Pflugscharmischer wird an einem Ende des Pflugscharmischers ein kontinuierlicher Strang erzeugt. Dies kann durch Bewegen des Mischers oder durch Bewegen einer Aufnahmeschale oder eines Förderbandes geschehen. In Abständen kann der Strang am Auslauf des Pflugscharmischers vorzugsweise abgeschnitten werden, um einen Teil des Stranges abzutrennen.

Optional kann der aus dem Pflugscharmischer austretende Strang zusätzlich durch eine oder mehrere Walzen weiter geformt werden. Zum Beispiel kann der Strang zu Blöcken oder Endlosbahnen geformt werden. Diese eignen sich vorteilhaft für die Verwendung als Pflanzpads oder als Isolationsrollen.

In einer weiteren bevorzugten Ausführungsform der Erfindung wird der geformte Strang mittels eines Mikrowellentrockners getrocknet. Der Strang oder die geformten nassen Zwischenprodukte werden einem Mikrowellentrockner zugeführt. Bevorzugte Einzelheiten des Trockners und des Trocknungsverfahrens werden weiter unten erläutert.

Mit Hilfe einer Mikrowellentechnik kann das geschäumte Material besonders schnell getrocknet werden, ohne den Schaum aufzulösen und ohne die Form des bereits geformten Strangs wesentlich zu beeinflussen. Die Schaumlamellen, die die Blasen voneinander trennen, können so während des Trocknens intakt bleiben und ihre dünne Form beibehalten, während sie dem Formkörper gleichzeitig Festigkeit und Elastizität verleihen. Die Blasen können zu Poren in einem festen Material gemacht werden.

Da der Schaumstoff besonders kleine Blasen mit einer dichten Packung aufweist, kann die Porosität des getrockneten Formkörpers sehr hoch und gleichmäßig sein. Ein mikrowellenbasierter Trocknungsschritt kann die für die Trocknung verwendete Energie besonders gleichmäßig verteilen, wodurch die unerwünschte dichte, nicht poröse Haut vermieden wird, die bei herkömmlichen Trocknungsverfahren entsteht. Die Mikrowellentrocknung kann Wassermoleküle, die sich tief im Inneren des gebildeten Schaums befinden, in Bewegung versetzen, so dass das verdampfte Wasser über das Blasennetzwerk austritt und eine Porenstruktur aus durchgehenden Poren bildet. Dies ist besonders vorteilhaft für die Interaktion mit der Umgebung, da sie nicht durch eine dichte Haut verschlossen ist. Die hohe Porosität und die durchgehende Porenstruktur verbessern die Isolationseigenschaften sowie die Interaktion des Formkörpers mit Erde, Wasser, Luft und Pflanzenwurzeln. Wachstumstests, die mit einem Formkörper aus solchen Schaumstoffen in einer Vielzahl von Klimazonen durchgeführt wurden, haben deutlich verbesserte Wachstumseigenschaften bei Pflanzen gezeigt. Ohne an eine Theorie gebunden sein zu wollen, wird angenommen, dass das verbesserte Wachstum durch die dichte Blasenpackung und die daraus resultierende Porosität des Formkörpers beeinflusst wird.

Die getrockneten Stränge können nach dem Trocknen in ihre endgültige Form geschnitten werden, um den bevorzugten Formkörper bereitzustellen. Vorzugsweise werden die getrockneten Stränge auch für eine Zeitperiode zwischen 5 - 15 Minuten, noch bevorzugter circa 10 Minuten entgast bis sie auf Paletten gestapelt werden.

In einem weiteren Aspekt betrifft die Erfindung eine Vorrichtung zur Herstellung eines Formkörpers, wobei die Vorrichtung einen Rotor-Stator-Mischer für die Vermischung und/oder Verschäumung einer homogenisierten Masse und einen Pflugscharmischer für die Formung eines Stranges aus einem Schaum umfasst, wobei die Vorrichtung zudem einen Mikrowellentrockner für die Trocknung des geformten Stranges umfasst. Ein Mikrowellen-Durchlauftrockner hat eine sehr hohe Effizienz, sodass der Energieverbrauch niedrig gehalten werden kann. Das Innere des Trockners kann einen Kanal bilden, durch den die geformten Schaumstoff-Zwischenprodukte fließen können, zum Beispiel mittels einer Fließbahn. Durch effektive Gestaltung der mehreren Applikatoren können vorzugsweise im inneren Trockenkanal homogene gleich verteilte elektromagnetische Felder erzeugt werden. Die Trocknung kann so besonders gleichmäßig erfolgen, wodurch die entstehenden Formkörper gleichmäßige Eigenschaften erhalten.

Der Verlauf und die Dauer des Trockenverfahrens hängt von den Trocknungsbedingungen, dem Profil der Energie- bzw. Temperaturverteilung und der Feuchtekonzentration wie auch von der Feuchtebewegung im Schaum ab. Vorzugsweise werden für die Auswahl der Betriebsbedingungen in dem Trockner die Feuchtebindung, die Form, die Abmessungen und die temperaturabhängigen dielektrischen Eigenschaften des Schaums in Betracht gezogen.

Der Mikrowellentrockner ist vorzugsweise ein Durchlauftrockner. Vorzugsweise umfasst der Trockner eine Mehrzahl von hintereinander geschalteten Applikatoren, wobei die Applikatoren vorzugsweise jeweils für den Betrieb mit 40 - 80 kW konfiguriert sind.

In einer bevorzugten Ausführungsform der Erfindung umfasst der Mikrowellentrockner quer zur Strangrichtung eine linke Portion, eine zentrale Portion und eine rechte Portion, wobei jede Portion einen oder mehrere hintereinander geschalteten Applikatoren umfasst.

Vorzugsweise sind jeweils die linke und rechte Portion des Trockners dafür konfiguriert, Mikrowellen mit 10 - 20 kW, vorzugsweise 14 - 16 kW auszustrahlen. Die zentrale Portion des Trockners ist vorzugsweise dafür konfiguriert, Mikrowellen mit einer höheren Energie, vorzugsweise zwischen 15 - 30 kW, noch bevorzugter 23 - 24 kW auszustrahlen. Diese Werte sind für einen Trockner mit einer Gesamtleistung von etwa 55 kW geeignet. Unabhängig von der Gesamtleistung des Mikrowellentrockners ist es vorteilhaft, dass etwa 25 - 30 %, vorzugsweise ca. 28,6 % der Leistung auf jeweils die linke und rechte Seite des zu formenden Körpers und etwa 40 - 45%, vorzugsweise ca. 42,7 % der Leistung auf die Mitte gerichtet sind.

Durch eine Optimierung der Energieverteilung in dem Trockenkanal erfolgt eine erhöhte Absorption der elektromagnetischen Wellen in den Schaum. Überraschenderweise ermöglicht es diese Verteilung, einen viel niedrigeren Energieverbrauch zu erzielen.

Durch die strategische Verteilung der Wärmezufuhr um den geformten Schaum herum kann zudem im Schaum ein Temperaturgradient zur Oberfläche hin erzeugt werden. Dies bedeutet, dass der Schaum eine höhere Temperatur in seinem Inneren als an seiner Oberfläche erhalten kann. Dadurch kann der Partialdruck des Dampfes oder der dampfenden Flüssigkeit im Inneren des Schaumes höher sein. Dies treibt den Dampf nach außen, sodass die Oberflächen der Formkörper porös bleiben. Die isolierenden und wasserhaltenden Eigenschaften des Formkörpers können so optimiert werden.

Zudem wird durch das Verdampfen im Inneren des Schaumes die Flüssigkeit durch die Porenstruktur des Formkörpers nach außen geführt, wobei vorzugsweise die Struktur des Formkörpers makrokapillar ist. Dies ermöglicht eine sehr hohe Trocknungsgeschwindigkeit. Durch die Porosität gemeinsam mit dem Temperaturgradienten zur Oberfläche hin können auch dickere Schichten des Schaumes ohne Abriebverluste getrocknet werden. Der Gesamtübertragungsgrad kann so erhöht werden.

Durch die hohe Trocknungsgeschwindigkeit und den geringen Energiebedarf eignet sich diese Form der Trocknung besonders für automatisierte Massenherstellungsverfahren, vorzugsweise für die kontinuierliche Fertigung.

Mittels Mikrowellentrocknung entsteht die Wärme durch die direkte Umwandlung elektromagnetischer Energie in kinetische Energie der Schaummoleküle. Dies bedeutet, die Wärme wird in dem Schaum selbst erzeugt. Die dadurch erfolgende Volumenerwärmung ist besonders vorteilhaft, da das Erhitzen der verschiedenen Komponenten selektiv erfolgen kann. Das Wasser kann dann selektiv erwärmt werden, da es höhere dielektrische Verluste als die weiteren Komponenten aufweist. Durch die selektive Erhitzung von Wasser kann die Bildung von Melanoiden durch die übrigen Komponenten des Schaumes unterdrückt werden. Melanoide entstehen oft in den herkömmlichen Trocknungsverfahren von organischen Produkten.

Wenn Stärkekörner in der Zusammensetzung verwendet werden, zum Beispiel als eiweißhaltige Rohstoffe, gerinnt ihre Eiweißhaut bei der bevorzugten Trocknungstechnik schneller. Hierdurch erfolgt eine Volumenvergrößerung der Körner um mehr als das Doppelte, sodass eine höhere spätere Wasserspeicherung im Endprodukt möglich ist.

Es wurde auch festgestellt, dass durch diese Trocknungstechnik auch eine mögliche Verkleisterung des Schaumes beseitigt werden konnte und die Trocknung ohne übermäßige Spannungen oder Risse erfolgen kann.

In einer weiteren bevorzugten Ausführungsform der Erfindung umfasst die Vorrichtung einen ersten Rotor-Stator-Mischer für die Vermischung und einen zweiten Rotor-Stator-Mischer für die Verschäumung. Vorzugsweise umfasst die Vorrichtung einen Pflugscharmischer für die Formung eines Stranges aus dem Schaum.

Der Pflugscharmischer umfasst eine bevorzugte Mischstrecke zwischen 2000 - 3000 mm und einen bevorzugten Durchmesser zwischen 350 - 550 mm.

Die Vorrichtung umfasst vorzugsweise auch Filter, Reaktor, Dosiersystem, Speicher, ein Nachschubreservoir und/oder ein Endlager für Schadstoffe für den Stoffkreislauf. Vorzugsweise wird die Zuführung der verschiedenen Rohstoffe in die Vorrichtung automatisch durch eine Steuereinheit gesteuert.

Die Vorrichtung sowie die oben ausgeführten Verfahrensschritte ermöglichen es, organische Formkörper mit abgestimmten Eigenschaften zu erhalten. Vorteilhafterweise ist der pH-Wert der Formkörper, sowie deren Porosität, Wasserspeicherfähigkeit, Dichte, Wärmeleitfähigkeit und Festigkeit einstellbar.

Die durch das erfindungsgemäße Verfahren und/oder die erfindungsgemäße Vorrichtung herstellbaren Formkörper weisen vorzugsweise eine hohe und lange Wasserspeicherfähigkeit auf. Dies ist insbesondere für Regionen mit niedrigen Niederschlägen geeignet. Die Wasserspeicherfähigkeit kann sowohl für Trocknungsperioden als auch für Starkniederschläge optimiert werden, welche bessere landwirtschaftliche Ergebnisse in schwierigen Klimazonen und auf schwierigen Böden ermöglicht.

Vorzugsweise sind die Oberflächen der Formkörper gut mit dem Boden benetzbar. Dies ermöglicht eine nahtlose Integration in den Boden, sodass die Stabilität der Pflanze erhöht wird. Vorzugsweise wird durch die Zusammensetzung und die Porosität der Formkörper eine hohe und intensive lonenaustauschbarkeit mit dem lokalen Boden unterstützt. Die Porosität kann auch dafür optimiert werden, um einen hohen konvektiven Transport gelöster Stoffe im Wasserstrom zu erhalten. Eine hohe lonenaustausch- und Massentransferrate kann biogen sein und die landwirtschaftlichen Ergebnisse verbessern.

Vorzugsweise können die Dichte und das Porennetz optimiert werden, um die Wärme- und Schallleitfähigkeit zu verringern. Eine Wärmeleitfähigkeit kann durch Abstimmung der Verschäumungsbedingungen auf 0,020 W/mK - 0,040 W/mK eingestellt werden.

Die Formkörper, die durch die oben erläuterten Verfahrensschritte und Vorrichtung hergestellt werden, sind überraschenderweise fest und UV-resistent. Auch Temperaturschwankungen zwischen Eis- und Wüstenbedingungen haben keinen nachteiligen Einfluss auf die Struktur des Formkörpers.

Die erfindungsgemäße Formkörper werden vorzugsweise in Pflanzplatten, Isolierschichten sowie Floristikartikeln verwendet.

In dieser Anmeldung bezeichnet der Begriff circa einen Bereich von +/-10% des genannten Wertes, vorzugsweise +/-5%, noch bevorzugter +/-3%.

Der Fachmann erkennt, dass Vorteile und bevorzugte Merkmale des erfindungsgemäßen Verfahrens auch für die erfindungsgemäße Vorrichtung und für die durch das Verfahren hergestellte Formkörper gelten und umgekehrt.

## Patentansprüche

1. Verfahren zur Herstellung eines Formkörpers auf Basis von proteinhaltigen Biopolymeren
**dadurch gekennzeichnet, dass**
der Formkörper aus einer Formmasse umfassend
20 bis 40 Gew.-% proteinhaltige Rohstoffe,
35 bis 70 Gew.-% Wasser,
10 bis 25 Gew.- % Pflanzenfasern,
2 bis 20 Gew.-% mineralische Stoffe und
0 bis 8 Gew.-% Nährstoffe
hergestellt wird, wobei während des Verfahrens zur Herstellung des Formkörpers der Formmasse keine zusätzlichen Treibmittel hinzugefügt werden.

2. Verfahren gemäß dem Anspruch 1,
**dadurch gekennzeichnet, dass**
das Verfahren eine Trocknung durch Mikrowellen umfasst, wobei die Trocknung vorzugsweise auf einem fließenden Förderband erfolgt.

3. Verfahren gemäß einem der Ansprüche 1 oder 2,
**dadurch gekennzeichnet, dass**
das Verfahren einen Schritt umfasst, bei dem die proteinhaltigen Rohstoffe zusammen mit den mineralischen Stoffen und optional den Nährstoffen in einem Behälter mit laufendem Rührwerk in Wasser zu einer homogenisierten Masse vermischt wird,
wobei der Behälter vorzugsweise ein Rotor-Stator-Mischer ist und der Rotor mit einer Geschwindigkeit zwischen 5 - 15, vorzugsweise 8 - 12, besonders bevorzugt 9,86 Umdrehungen pro Minute rotiert.

4. Verfahren gemäß dem vorherigen Anspruch,
**dadurch gekennzeichnet, dass**
das Verfahren einen Schritt umfasst, bei dem die Pflanzenfasern während der Vermischung der homogenisierten Masse in den Behälter eingeführt werden, wobei die Vermischung vorzugsweise bei einer Temperatur zwischen 3° - 35°C, vorzugsweise zwischen 15 - 25°C, erfolgt,
wobei die Vermischung vorzugsweise dafür konfiguriert ist, dass die homogenisierte Masse einen Feuchtegehalt zwischen 59 - 65% und einen pH-Wert zwischen 5 - 12 aufweist.

5. Verfahren gemäß dem vorherigen Anspruch,
**dadurch gekennzeichnet, dass**
die Vermischung dafür konfiguriert ist, eine homogenisierte Masse mit einer Viskosität zwischen 10² mPa.s - 10² Pa.s zu erhalten, wobei die homogenisierte Masse vorzugsweise eine Suspension ist.

6. Verfahren gemäß dem vorherigen Anspruch,
**dadurch gekennzeichnet, dass**
das Verfahren einen Schritt umfasst, bei dem die homogenisierte Masse bei Anwesenheit von Luft verschäumt wird, wobei die Verschäumung vorzugsweise in dem Mischer bei einer Temperatur zwischen 3° - 35°C , vorzugsweise zwischen 15 - 25°C, erfolgt, wobei der Rotor des Mischers vorzugsweise mit einer Geschwindigkeit zwischen 250 - 500, vorzugsweise 300 - 400, besonders bevorzugt 360 Umdrehungen pro Minute rotiert, wobei eine Verweilzeit der homogenisierten Masse bei der Verschäumung zwischen 45 - 90 Sekunden, vorzugsweise 63 Sekunden beträgt.

7. Verfahren gemäß dem vorherigen Anspruch,
**dadurch gekennzeichnet, dass**
die Verschäumung der homogenisierten Masse dafür konfiguriert ist, einen Schaum mit einer relativen Dichte zwischen 15 - 35 %, vorzugsweise zwischen 20 - 30%, und eine bevorzugte relative Feuchte zwischen 40 % - 50 % zu erhalten, wobei die relative Dichte dem Verhältnis zwischen dem Volumen einer kontinuierlichen Flüssigkeitsmatrix, welche mehrere Blasen voneinander trennt, und dem Gesamtvolumen des Schaumes entspricht.

8. Verfahren gemäß dem vorherigen Anspruch,
**dadurch gekennzeichnet, dass**
die Blasen durch Zugabe von Flüssigkeit während der Verschäumung abgerundet werden, wobei vorzugsweise die Kugelpackung der Blasen auch durch Zugabe von Flüssigkeit erhöht wird.

9. Verfahren gemäß einem der vorherigen Ansprüche,
**dadurch gekennzeichnet, dass**
die Zugabe von Flüssigkeit dafür konfiguriert ist, dass der Schaum eine relative Feuchte zwischen 35 - 45%, einen bevorzugten pH-Wert zwischen 5 - 12, vorzugsweise 6 - 9,8 aufweist.

10. Verfahren gemäß einem der Ansprüche 6 - 9,
**dadurch gekennzeichnet, dass**
das Verfahren einen Schritt umfasst, bei dem die verschäumte homogenisierte Masse mittels eines Pflugscharmischers mit einer Drehzahl zwischen 50 - 80, vorzugsweise 55 - 70, noch bevorzugter 65 Umdrehungen pro Minute zu einem Strang geformt wird.

11. Verfahren gemäß einem der Ansprüche 6 - 10,
**dadurch gekennzeichnet, dass**
der geformte Strang mittels eines Mikrowellentrockners getrocknet wird, wobei die Trocknung vorzugsweise auf einem fließenden Förderband erfolgt.

12. Vorrichtung zur Herstellung eines Formkörpers mittels eines Verfahrens nach einem der vorherigen Ansprüche,
**dadurch gekennzeichnet, dass**
die Vorrichtung einen Rotor-Stator-Mischer für die Vermischung und/oder Verschäumung der homogenisierten Masse und
einen Pflugscharmischer für die Formung eines Stranges aus dem Schaum umfasst, wobei die Vorrichtung zudem einen Mikrowellentrockner für die Trocknung eines geformten Stranges umfasst.

13. Vorrichtung nach dem vorherigen Anspruch,
**dadurch gekennzeichnet, dass**
der Mikrowellentrockner ein Durchlauftrockner ist und eine Mehrzahl von hintereinander geschalteten Applikatoren umfasst, wobei die Applikatoren vorzugsweise jeweils für den Betrieb mit 40 - 80 kW konfiguriert sind und der Mikrowellentrockner vorzugsweise quer zur Strangrichtung eine linke Portion, eine zentrale Portion und eine rechte Portion umfasst, wobei jede Portion einen oder mehrere hintereinander geschaltete Applikatoren umfasst.

14. Vorrichtung nach dem vorherigen Anspruch,
**dadurch gekennzeichnet, dass**
die linke Portion des Trockners dafür konfiguriert ist, Mikrowellen mit 10 - 20 kW, vorzugsweise 14 - 16 kW auszustrahlen,
die zentrale Portion des Trockners dafür konfiguriert ist, Mikrowellen mit 15 - 25 kW, vorzugsweise 23 - 24 kW auszustrahlen, und
die rechte Portion des Trockners dafür konfiguriert ist, Mikrowellen mit 10 - 20 kW, vorzugsweise 14 - 16 kW auszustrahlen.

15. Vorrichtung nach einem der Ansprüche 12 - 14,
**dadurch gekennzeichnet, dass**
der Pflugscharmischer eine Mischstrecke zwischen 2000 - 3000 mm und einen Durchmesser zwischen 350 - 550 mm aufweist.
